# EUROPÄISCHE PATENTSCHRIFT

(11) **EP 3 411 667 B1**
(45) Veröffentlichungstag und Bekanntmachung des Hinweises auf die Patenterteilung: **03.11.2021**
(21) Anmeldenummer: 16802017.0
(22) Anmeldetag: 23.11.2016
(51) Int. Cl.: G01D 5/244, G01D 18/00

(54) **VERFAHREN ZUM KALIBRIEREN EINES DREHGEBERS UND DREHGEBER ZUR BESTIMMUNG EINER KORRIGIERTEN WINKELPOSITION**
METHOD FOR CALIBRATING A ROTARY ENCODER AND ROTARY ENCODER FOR DETERMINING A CORRECTED ANGLE POSITION
PROCÉDÉ DE CALIBRATION D'UN CODEUR ROTATIF ET CODEUR ROTATIF POUR DÉTERMINER UNE POSITION ANGULAIRE CORRIGÉE

(30) Priorität: 04.02.2016 DE 102016101965
(43) Veröffentlichungstag der Anmeldung: 12.12.2018
(73) Patentinhaber: Fraba B.V., 6416 SG Heerlen (NL)
(72) Erfinder: KETTERING, Uwe, 50968 Köln (DE)
(74) Vertreter: terpatent Patentanwälte ter Smitten Eberlein-Van Hoof Rütten Daubert
(86) Internationale Anmeldenummer: PCT/EP2016/078570
(87) Internationale Veröffentlichungsnummer: WO 2017/133806

(56) Entgegenhaltungen:
- DE-A1- 10 335 862
- JP-A- 2006 170 837
- US-A1- 2010 182 762
- US-A1- 2015 247 746

## Beschreibung

Die Erfindung betrifft ein Verfahren zum Kalibrieren eines Drehgebers zur Erfassung einer Drehwinkelposition einer Maschinenwelle, insbesondere eines fremdgelagerten Absolutwertgebers, wobei der Drehgeber zumindest eine mit der Maschinenwelle drehfest verbundene Erregereinheit, mit der zur Erfassung einer Ist-Drehwinkelposition zumindest ein Messpunkt definiert ist, und eine mit der Erregereinheit funktional zusammenwirkende, feststehende Sensoreinheit aufweist. Ferner betrifft die Erfindung einen Drehgeber zur Bestimmung einer korrigierten Winkelposition.

Die Information über eine aktuelle Position einer Maschinenwelle ist für einen präzisen Betrieb einer Maschine unerlässlich. Solche Positionsangaben spielen beispielsweise bei der Automatisierung von Anlagen, insbesondere zur Steuerung technischer, zumeist hochpräziser Vorgänge, eine wichtige Rolle. So sind beispielsweise zur Steuerung einer Werkzeugmaschine, eines Roboterarms oder ähnlicher Anwendungen stets Systeme zur Positionserfassung erforderlich. Ferner sind solche Systeme auch bei Elektromotoren zur Geschwindigkeitsregelung erforderlich, insbesondere um zur Spulenansteuerung zu wissen, an welcher Stelle sich der Rotor befindet.

Inkrementelle Drehgeber dienen zur Erfassung von Positionsänderungen und können zur Messung einer Wegstrecke, Wegrichtung oder einer Winkelveränderung eingesetzt werden. Solche Inkrementalgeber ermöglichen nur die Erfassung einer relativen Position innerhalb der Teilung einer Skala bzw. eines Strichcodes. Zur Bestimmung einer absoluten Position ist ein Erfassen einer gewissen Anzahl von überlaufenen Skalenteilungen erforderlich.

Absolute Drehgeber können die absolute Position einer Maschinenwelle vorteilhafterweise direkt bestimmen. Dies erfolgt über zumeist eine codierte und jeweils einer bestimmten Winkelposition der Welle eindeutig zugeordneten Abtastung.

Um eine besonders hohe Messgenauigkeit zu ermöglichen, ist eine besonders exakte Positionierung der Sensoreinheit relativ zu der zu messenden Maßverkörperung erforderlich, so dass insbesondere bei fremdgelagerten Drehwinkelmesssystemen nach der Montage des Drehgebers an einer kundenseitigen Maschinenwelle eine zusätzliche Nachkalibrierung zumeist unerlässlich ist. Eine solche Nachkalibrierung erfolgt in der Regel unter Zuhilfenahme eines Referenzwertgebers, der zur Kalibrierung des Drehgebers zumindest temporär ebenfalls an der Maschinenwelle angeordnet werden muss. Dies ist jedoch relativ aufwendig und kostenintensiv.

Aus der DE 103 35 862 A1 ist ein Verfahren zum Kalibrieren eines Drehgebers bekannt. Hierzu wird eine externe Speicher- und Recheneinheit verwendet, sodass auch dieses Kalibrierungsverfahren relativ aufwendig und kostenintensiv ist.

Aufgabe der vorliegenden Erfindung ist es daher, ein Verfahren zum Kalibrieren eines Drehgebers bereitzustellen, bei dem mit relativ geringem Aufwand eine besonders hohe Messgenauigkeit des Drehgebers kostengünstig ermöglicht wird.

Die Lösung der Aufgabe erfolgt erfindungsgemäß durch ein Verfahren mit den Merkmalen des Anspruchs 1 und einem Drehgeber mit den Merkmalen des Anspruchs 11.

Das erfindungsgemäße Verfahren zum Kalibrieren eines fremdgelagerten Drehgebers zur Erfassung einer Drehwinkelposition einer Maschinenwelle, insbesondere eines Absolutwertgebers, sieht die folgenden Schritte vor:
Versetzen der Maschinenwelle in eine Drehbewegung mit einer vorgegebenen, insbesondere konstanten, Drehgeschwindigkeit, beispielsweise auf eine Drehzahl im Bereich von 1000 Umdrehungen pro Minute. Die Drehgeschwindigkeit kann beispielsweise vom Drehgeber selbst, insbesondere an einen Antriebsmotor bzw, an eine Steuerelektronik, vorgegeben sein.

Es folgt ein Erfassen eines mittels der Erregereinheit an der Maschinenwelle definierten Start-Messpunktes, der insbesondere ein Nulldurchgang der Maschinenwelle ist. Das Erfassen erfolgt mittels der Sensoreinheit. Mit dem Erfassen des Start-Messpunktes wird in dem Drehgeber ein Zeitmodul zum Hochzählen eines Zeitwertes aktiviert, insbesondere zum Messen einer Laufzeit. Parallel beginnt über die Sensoreinheit die zeitabhängige Erfassung der Ist-Position. Dies kann zum Beispiel zu festen Zeit oder Winkelintervallen erfolgen. Insbesondere erfolgt ein Erfassen zumindest eines Zwischen-Messpunktes, der grundsätzlich an jeder beliebigen Ist-Drehwinkelposition angeordnet sein kann, besonders bevorzugt der Nulldurchgang ist. Dem erstfassten Zwischen-Messpunkt wird ein zum Erfassungszeitpunkt hochgezählter Zeitwert zugeordnet, so dass jeder mittels der Sensoreinheit erfassten Ist-Drehwinkelposition der Maschinenwelle ein bestimmter Zeitwert zuordenbar ist und somit eine Laufzeit bis zum Zwischen-Messpunkt erfassbar ist.

Anschließend sind ein Speichern der Drehwinkelposition des Zwischen-Messpunktes sowie ein Speichern des zugeordneten Zeitwertes vorgesehen. Die Ist-Positionswerte werden insbesondere zusammen mit einem Zeitstempel in einem Speicher abgelegt.

Nach fortgeschrittener Rotation der Maschinenwelle erfolgt ein Erfassen eines End-Messpunktes, der insbesondere wiederum der Nulldurchgang nach einer, beispielsweise einer einzigen, vollen Umdrehung der Maschinenwelle und somit gleich mit dem Start-Messpunkt angeordnet sein kann. Mit diesem End-Messpunkt endet das zeitabhängige Erfassen der Ist-Position. Der Start- und der End-Messpunkt können beispielsweise an derselben umfangsseitigen Stelle angeordnet sein, so dass die Messung insbesondere über eine volle Umdrehung stattfinden kann.

Anschließend wird der mittels eines Zeitmoduls gemessene bzw. hochgezählte Zeitwert festgestellt, wobei dieser Zeitwert eine Laufzeit für die Drehbewegung der Maschinenwelle von dem Start-Messpunkt bis zum End-Messpunkt wiedergibt. Das sensorseitige Zeitmodul kann somit insbesondere zum zeitabhängigen Erfassen von Ist-Positionswerten dienen. Diese tatsächlich benötigte Laufzeit kann mit einer Soll-Laufzeit, die beispielsweise für einen Idealfall definiert ist, abgeglichen werden. Als Beispiel für einen Idealfall kann die Laufzeit 360ms für eine Umdrehung oder 360° betragen, wobei hierbei für jeden einzelnen Drehwinkel der Maschinenwelle als Soll-Laufzeit genau 1ms vorgegeben ist. Unter der Annahme einer konstanten Geschwindigkeit hat in diesem Fall die rotierende Maschinenwelle in einer Millisekunde genau einen Winkelgrad zurückgelegt.

Es folgt ein Berechnen zumindest einer zeitabhängigen Soll-Drehwinkelposition unter Annahme einer, vorzugsweise konstanten, Drehbewegung der Maschinenwelle von dem Start-Messpunkt bis zum End-Messpunkt. Die Berechnung des zumindest einen Soll-Positionswertes zwischen Start- und End-Messpunkt erfolgt insbesondere durch eine lineare Extrapolation der erfassten Zwischen-Messpunkte bzw. der jeweils zugeordneten Ist-Drehwinkeipositionswerte über die Drehbewegung von Start- zu Endmesspunkt. Dadurch kann die "ideale" Drehbewegung der Maschinenwelle berechnet werden und zur Ermittlung einer Abweichung der tatsächlichen Maschinendrehbewegung von der "idealen" Drehbewegung für einzelne Drehpositionen dienen.

Hierzu erfolgt in einem weiteren Berechnungsschritt ein Ermitteln einer Abweichung zwischen der erfassten Ist-Drehwinkelposition und der berechneten Soll-Drehwinkelposition für zumindest einen Zeitwert. Unter der Abweichung ist insbesondere eine Abweichung des gemessenen zeitlichen Winkelverlaufs der Maschinenwelle von dem zuvor berechneten Ideal-Winkelverlauf der Maschinenwelle, beispielsweise ein linearer zeitlicher Winkelverlauf, zu verstehen. Dadurch kann insbesondere ein Korrekturwert bzw. eine Anzahl hiervon berechnet werden, mit dem bzw. denen die Abweichung des gemessenen zeitlichen Winkelverlaufs von dem berechneten Winkelverlauf korrigiert werden kann. Das Durchführen der Korrekturberechnung erfolgt erfindungsgemäß mittels eines im Drehgeber gespeicherten Auswerte- bzw. Berechnungsmoduls, so dass kein zusätzliches Gerät hierzu erforderlich ist.

Bei Vorliegen einer Abweichung zumindest einer Ist-Drehwinkelposition von einer berechneten Soll-Drehwinkelposition erfolgt ein Korrigieren des Ausgangssignals des Drehgebers um die berechnete Abweichung. Dadurch kann der Dreggeber unmittelbar ein korrigiertes Signal ausgeben. Beispielsweise kann bei Unterschreitung einer berechneten Soll-Drehwinkelposition ein korrespondierendes Winkelmaß zu dem erfassten Drehwinkel hinzuaddiert oder bei Überschreiten einer Soll-Winkelposition ein korrespondierendes Winkelmaß von dem erfassten Drehwinkel abgezogen werden. Die Signalerfassung kann somit echtzeitfähig durchgeführt werden. Bei Nicht-Vorliegen einer Abweichung kann der Absolut-Positionswert von dem Drehgeber direkt, das heißt ohne eine Korrekturberechnung, ausgegeben werden.

Durch dieses Verfahren können insbesondere individuelle Maßtoleranzen der Maschinenwelle bzw. des Maschinensystems, Ungenauigkeiten bei der Positionierung des Drehgebers oder andere an der Maschinenwelle individuell auftretende Störeinflüsse, wie Motor-Bremsmomente, erfasst und, insbesondere elektronisch, ausgeglichen werden, so dass die Messgenauigkeit des Drehgebers deutlich erhöht werden kann. Insbesondere kann der Drehgeber für jede Maschinenwelle, an der der Drehgeber gelagert ist, "kundenseitig", individuell auf ein hohes Genauigkeitsmaß endkalibriert werden. Dadurch kann es genügen, dass beim Hersteller lediglich eine relativ ungenaue bzw. grobe Vorkalibrierung des Drehgebers beispielsweise gegen einen Referenzwertgeber erfolgt, und der Drehgeber anschließend am Einsatzort - nach Montage an einer kundenseitigen Maschinenwelle - hinsichtlich der individuellen, beispielsweise durch Maßtoleranzen verursachten, Ungenauigkeiten exakt kalibriert wird. Dadurch können die oben beispielhaft erwähnten Maßtoleranzen - insbesondere elektronisch - ausgeglichen werden. Hierbei ist zur Kalibrierung die Anordnung eines Zusatz- bzw. Referenzgerätes nicht erforderlich. Vielmehr kann der Drehgeber als solcher - ohne Zusatzgeräte - eine Kalibrierung vornehmen. Dadurch kann für jede individuelle Maschinenwelle ein Drehgeber mit einer besonders hohen Drehwinkelauflösung bereitgestellt werden, wobei dessen Kalibrierung relativ einfach und kostengünstig ist.

Vorzugsweise erfolgt ein Speichern der erfassten Ist-Drehwinkelposition, der berechneten Soll-Drehwinkelposition und/oder der Abweichung in einem dazu vorgesehenen Speicher. Ferner kann ein Speichern einer Korrekturtabelle, des zeitlichen Winkelverlaufs und/oder zumindest eines Korrekturwertes erfolgen. Der Korrekturwert kann insbesondere einem Abweichungswert entsprechen. Die gespeicherten Werte können somit für eine künftige Korrekturberechnung herangezogen werden, so dass der Drehgeber im Betrieb eine relativ hohe Messgenauigkeit aufweisen kann. Der Speicher ist vorteilhafterweise in dem Drehgeber integriert, so dass die Anzahl der Bauteile relativ gering sein kann.

Vorzugsweise erfolgt nach dem Berechnen einer Abweichung ein Berechnen eines zukünftigen zeitlichen Winkelverlaufs der Maschinenwelle. Hierzu kann zumindest eine zukünftige Winkellage der Maschinenwelle ermittelt werden, vorzugsweise wird der gesamte künftige Winkelkurvenverlauf neu bestimmt. Insbesondere werden die Werte der Abweichung und des Winkelverlaufs extrapoliert und für zukünftige Winkelpositionen der Maschinenwelle herangezogen. Dadurch kann beispielsweise der Zeitpunkt eines zukünftigen Nulldurchgangs ermittelt werden, so dass die Messgenauigkeit deutlich erhöht werden kann. Dadurch kann insbesondere bestimmt werden, wie sich die Winkellage der Welle über eine volle Umdrehung pro Zeitwert verändert, woraus Rückschlüsse beispielsweise hinsichtlich der an der Welle anliegenden Bremsmomente geschlossen werden können. Die Bremsmomente können somit bei der exakten Bestimmung einer künftigen Winkellage berücksichtigt werden. Dies kann beispielsweise zur Berechnung der Beschleunigungs- und Bremsdaten der Maschinenwelle vorteilhaft sein, insbesondere bei der Anwendung an einer Maschinenwelle eines Roboterarms, der exakt positioniert werden soll.

Vorzugsweise erfolgen das Berechnen der Soll-Drehwinkelposition, das der Drehwinkel-Abweichung und/oder das Berechnen des zeitlichen Winkelverlaufs iterativ. Dazu können insbesondere zur Ermittlung einer angenäherten Winkelstrecken-Abweichung die Verfahrensschritte - bis auf das Versetzen in Rotation - zumindest zweimal nacheinander angewendet werden. Beispielsweise können zur Messung mehrere Umdrehungen der Maschinenwelle vorgesehen sein und/oder pro Umdrehung mehrere erste Messpunkte und mehrere zweite Messpunkte erfasst und ausgewertet werden, Besonders bevorzugt werden die Schritte so lange wiederholt bis eine vorgegebene Genauigkeit erreicht wird. Hierzu kann ein Grenzwert bzw. Grenzbereich vorgegeben sein. Sofern der Grenzbereich erreicht ist, kann vom Drehgeber ein Signal über die Fertigstellung der Kalibrierung ausgegeben werden.

Vorzugsweise erfolgen das das Berechnen der Soll-Drehwinkelposition, das der Drehwinkel-Abweichung und/oder das Berechnen des zeitlichen Winkelverlaufs mittels einer in dem Drehgeber gespeicherten Korrekturtabelle, Die Korrekturtabelle kann Zeit- und Positionswerte zur Korrektur der Messpunkte bzw. Nulldurchgänge der Welle enthalten, insbesondere einen Korrekturfaktor bzw. eine Anzahl hiervon. Ferner kann in der Korrekturtabelle eine Zeitfolge hinterlegt sein, die Informationen über eine Winkelposition der Welle nach einer bestimmten Zeit oder über einen zeitlichen Winkelverlauf enthält. Insbesondere kann die Korrekturtabelle Werte über die tatsächliche Winkellage der Maschinenwelle, über einen berechneten - zumeist linearen - zeitlichen Winkelverlauf und/oder über sonstige Informationen zu Bremsmomenten der Maschinenwelle aufweisen. Die Korrekturtabelle kann zudem individuelle und von einem jeweiligen Hersteller vorgegebene Parameter umfassen, beispielsweise über den konkreten Einsatzort und Funktion des Drehgebers bzw. der Maschinenwelle. Dadurch kann der Drehgeber für verschiedene Systeme die entsprechende Korrekturtabelle aufweisen. Ferner kann die Nach-Kalibrierung besonders exakt erfolgen, so dass der Drehgeber im Betrieb eine relativ hohe Messgenauigkeit aufweisen kann.

Vorteilhafterweise werden pro Umdrehung der Maschinenwelle zumindest zwei erste Messpunkte und zwei zweite Messpunkte erfasst, so dass pro Umdrehung der Maschinenwelle zumindest zweimal ein Berechnen der Abweichung und/oder des zeitlichen Winkelverlaufs erfolgt. Dies ermöglicht eine besonders genaue Kalibrierung des Drehgebers. Vorzugsweise erfolgt vor dem Versetzen der Maschinenwelle in eine Drehbewegung ein Anordnen bzw. Montieren einer Trägheitsmasse an der Antriebswelle. Dadurch kann insbesondere der Rundlauf der Antriebswelle verbessert werden, insbesondere können ein Anlaufruckeln oder andere störende Ruckelmomente verhindert werden, so dass eine besonders feine und exakte Messung bzw. Kalibrierung ermöglicht sind. Die Trägheitsmasse kann beispielsweise durch eine Schwungscheibe bereitgestellt werden.

Vorzugsweise erfolgen vor dem Erfassen eines Start-Messpunktes ein Abschalten eines die Maschinenwelle antreibenden Antriebsmotors und/oder ein Auskuppeln der Maschinenwelle von dem Antriebsmotor, so dass die Antriebswelle für das Erfassen der Messpunkte in einen Freilauf versetzt wird. Dadurch kann das Bremsverhalten der Maschinenwelle (Widerstand im Freilauf) über die Zeit besonders exakt erfasst werden und die Berechnung künftiger Winkelpositionen der Welle präzisiert werden. Insbesondere können konkrete Rückschlüsse für die Kalibriergenauigkeit gewonnen werden. Ferner kann durch den Abgleich von vorgegebenen Sollwerten mit den tatsächlichen Istwerten bezüglich der Laufzeiteigenschaften der Antriebswelle eine besonders hohe Messgenauigkeit bzw. Messauflösung erreicht werden.

Vorzugsweise erfolgt das Erfassen der Messpunkte mittels zumindest eines Magnetfeldsensors, wie eines AMR- oder Hall-Sensors. Dadurch kann eine besonders einfache und exakte Drehwinkelmessung durch den Drehgeber erfolgen.

Vorzugsweise erfolgt vor dem Versetzen der Maschinenwelle in eine Drehbewegung und einer Montage des Drehgebers an der Maschinenwelle ein herstellerseitiges Vor-Kalibrieren des Drehgebers auf eine erste Messgenauigkeitsstufe. Bei der ersten Messgenauigkeitsstufe kann beispielsweise eine Messgenauigkeit zur Winkellageerkennung von +/-1° erreicht werden. Dadurch kann der Drehgeber für eine erste, grobe Ansteuerung eines Antriebsmotors dienen, beispielsweise zum Zwecke der eigentlichen Haupt-Kalibrierung des Drehgebers, wobei diese Haupt-Kalibrierung bevorzugt an der kundenseitigen Maschinenwelle erfolgt. Somit kann die Kalibrierung des Drehgebers kundenseitig ohne einen zusätzlichen (Referenz-) Drehgeber erfolgen. Bei der Haupt-Kalibrierung an der kundenseitigen Maschinenwelle kann der Drehgeber auf eine zweite Messgenauigkeitsstufe kalibriert werden, wobei die zweite Messgenauigkeitsstufe einer besonders genauen Kalibrierung entspricht.

Der erfindungsgemäße Drehgeber zur Erfassung einer Drehwinkelposition einer Maschinenwelle, insbesondere ein Absolutwertgeber, weist zumindest eine mit der Maschinenwelle drehfest verbundene Erregereinheit und eine mit der Erregereinheit funktional zusammenwirkende, feststehende Sensoreinheit auf. Ferner weist der Drehgeber ein Zählmodul zum Hochzählen von erfassten Messpunkten, insbesondere von Nulldurchgängen, ein Zeitmodul zum Hochzählen eines Zeitwertes, insbesondere zum zeitabhängigen Erfassen von Ist-Positionswerten, und ein Berechnungsmodul zum Berechnen zumindest einer Soll-Drehwinkelposition und/oder einer Abweichung zwischen der erfassten Ist-Drehwinkelposition und der berechneten Soll-Drehwinkelposition auf. Das Berechnungsmodul kann geeignet sein, einen zeitlichen Winkelverlauf und/oder den Zeitpunkt für einen künftigen Nulldurchgang zu berechnen. Darüber hinaus umfasst der Drehgeber ein Speichermodul zum Speichern zumindest einer Korrekturtabelle. Dadurch kann der Drehgeber geeignet sein, das oben beschriebene Verfahren - insbesondere ohne weitere Referenz-Drehgeber - an einer kundenseitigen Maschinenwelle durchzuführen. Der Drehgeber kann insbesondere als ein fremdgelagertes bzw. lagerloses Drehgeber-Kit ausgebildet sein, wobei eine an der Maschinenwelle angeordnete Erregereinheit und eine zu der Maschinenwelle ausgerichtete, separate Sensoreinheit vorgesehen sind. Dadurch eignet sich der Drehgeber besonders gut zur Nachrüstung an einer bestehenden Anlage. Insbesondere kann eine Montage des Drehgebers an der kundenseitigen Maschinenwelle derart erfolgen, dass zumindest eine mit der Maschinenwelle drehfest verbundene Codespur und eine zum Auslesen der Codespur korrespondierende, feststehende Leseeinheit an der Maschinenwelle angeordnet werden. Die Codespur kann für eine optische, magnetische, kapazitive oder induktive Erfassung ausgebildet sein. Vorzugsweise ist die Codespur eine magnetische Spur, die typischerweise von einer magnetischen Erregereinheit erzeugt wird. Die magnetische Erregereinheit kann beispielsweise durch einen oder mehrere Dipolmagnete gebildet sein. Alternativ oder zusätzlich kann die Codespur eine zur optischen Auslesung geeignete Spur sein. Die Codespur kann an bzw. auf einer Hülse angeordnet sein, welche auf die Maschinenwelle gesteckt und befestigt werden kann. Die Leseeinheit ist insbesondere eine optische, magnetische, kapazitive oder induktive Sensoreinheit, die geeignet ist, die jeweilige Codespur auszulesen und die ausgelesene Information in ein elektrisches Signal zu verwandeln. Bei einer magnetischen Erregereinheit ist die Leseeinheit beispielsweise ein Hallsensor. Dadurch kann ein als Drehgeber-Kit ausgebildeter Drehgeber in relativ einfacher Weise an einer kundenseitigen Maschinenwelle angeordnet werden.

Nachfolgend wird die Erfindung anhand einer bevorzugten Ausführung unter Bezugnahme auf die anliegenden Zeichnungen näher erläutert. Darin zeigen:
Figur 1a schematisch ein motorisch-angetriebenes Industrietor mit einem erfindungsmäßen Drehgeber,
Figur 1b schematisch den Drehgeber aus Figur 1a in einer Detail-Schnittansicht,
Figur 2 schematisch einen Ablauf des erfindungsgemäßen Verfahrens, und
Figur 3 einen zeitlichen Winkelverlauf vor und nach einer Kalibrierung.

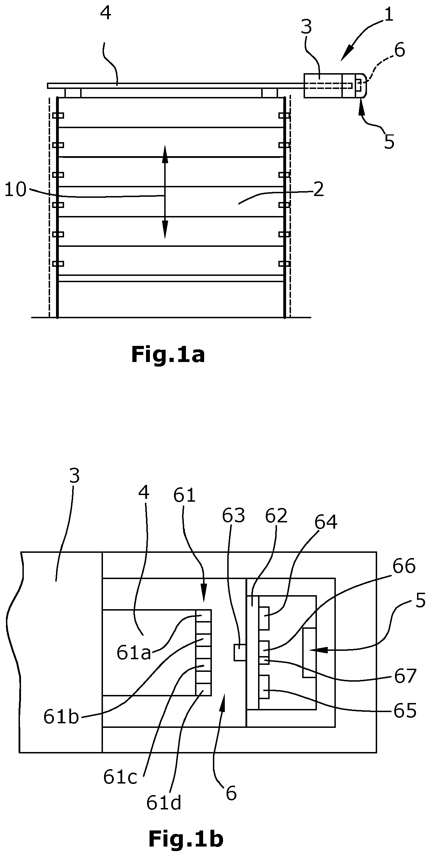

In Figur 1a ist ein Beispiel für eine Anwendung des erfindungsgemäßen Drehgebers 6 gezeigt. Hierbei ist der Drehgeber 6 an einem an sich bekannten Torantriebssystem 1 eines Rolltors 2 angeordnet und dient zur Erfassung einer exakten Position einer Antriebswelle 4. Das Rolltor 2 dient zum Öffnen und Schließen einer Durchfahrt und ist von einem Antriebsmotor 3 motorisch angetrieben auf und ab bewegbar, weiches durch das Bezugszeichen 10 gezeigt ist. Das Torantriebssystem 1 umfasst den Antriebsmotor 3 und eine Maschinen- bzw. Antriebswelle 4. Der Antriebsmotor 3 weist eine nicht näher dargestellte Steuereinheit 5 auf, die den Antriebsmotor 3 gemäß einer Vorgabe ansteuert.

An einem axialen Ende der Antriebswelle 4 ist der Drehgeber 6 angeordnet, insbesondere als ein fremdgelagerter Drehgeber. Der Drehgeber 6 ist als ein Drehgeber-Kit ausgebildet, wobei das Drehgeber-Kit im Bereich eines freien Endes der Antriebswelle 4, insbesondere im Bereich einer Steuereinheit 5 zur Ansteuerung des Antriebsmotors 3 angeordnet ist und mit dieser verbunden ist. Dadurch kann der Drehgeber 6 zur Ansteuerung des Antriebsmotors 3 dienen, insbesondere zur Erfassung der Drehwinkelposition der Antriebswelle 4. Die Erfassung als solche kann hierbei in einer an sich bekannten Art und Weise erfolgen.

Wie in der Figur 1b gezeigt, weist der Drehgeber 6 eine an dem freien Ende der Antriebswelle 4 angeordnete und mit der Antriebswelle 4 drehfest verbundene magnetische Erregereinheit 61 auf. Die Erregereinheit 61 bildet mittels mehrerer über den Umfang angeordneter Permanentmagnete eine auslesbare magnetische Codespur. Es ist möglich, auch nur einen als Dipol ausgebildeten Magneten zu verwendet, wobei hierbei die Codespur insbesondere nur zwei über den Umfang der Maschinenwelle angeordnete, erfassbare Drehwinkelpositionen umfasst. Zum Auslesen der Codespur ist eine Sensoreinheit 62 vorgesehen, die zumindest einen Sensor 63, insbesondere einen Hallsensor, aufweist. Dazu kann der Hall-Sensor 63 mit den an der Antriebswelle 4 angeordneten Permanentmagneten in Wirkverbindung gebracht werden und somit die Drehbewegung der Antriebswelle 4 erfassen.

Der Drehgeber 6 ist geeignet, an der Antriebswelle 4 eine automatische Kalibrierung durchzuführen, insbesondere ohne einen zusätzlichen Referenzwertgeber. Dazu weist der Drehgeber 6, insbesondere an der Sensoreinheit 62, ein Speichermodul 64 zum Speichern zumindest eines zeitlichen Verlaufs von Ist-Positionswerten 72 sowie einer nicht dargestellten Korrekturtabelle, ein Zählmodul 67 zum Zählen von erfassten Messpunkten 61a, 61b, 61c, 61d, beispielsweise Nulldurchgängen, ein Zeitmodul 65 zum Hochzählen eines Zeitwertes t und ein Berechnungsmodul 66 zum Ermitteln zumindest eines Korrekturfaktors auf.

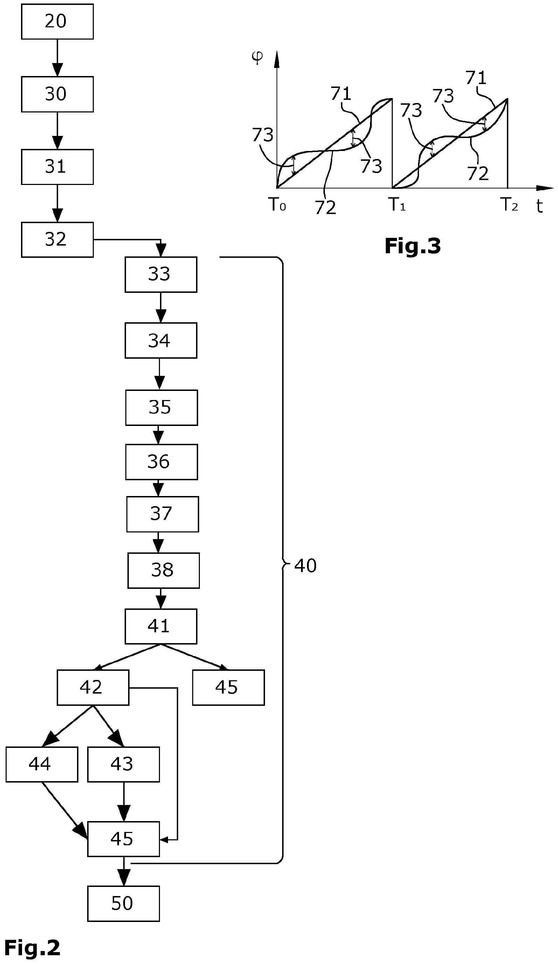

In der Figur 2 ist der Ablauf des erfindungsgemäßen Verfahrens zum Kalibrieren des Drehgebers 6 gezeigt, wobei zudem noch weitere Verfahrensschritte gezeigt sind, die dem eigentlichen Kalibrierverfahren 40 vor- oder nachgelagert sein können.

In einem ersten Schritt erfolgt optional ein herstellerseitiges Vor-Kalibrieren 20 des Drehgebers 6 auf eine erste Messgenauigkeitsstufe. Das Vor-Kalibrieren 20 kann insbesondere beim Hersteller unter Zuhilfenahme eines Referenzgerätes erfolgen. Die erste Messgenauigkeitsstufe kann einer relativ groben Messgenauigkeit des Drehgebers 6 entsprechen, insbesondere einer Messgenauigkeit, die im Betrieb des Drehgebers 6 zur hochauflösenden Positionsbestimmung grundsätzlich nicht angewendet werden würde. Die Messgenauigkeit hinsichtlich einer Winkellageerkennung kann hierbei beispielsweise +/-1° betragen.

In einem nächsten optionalen Schritt erfolgt ein Transportieren 30 des vorkalibrierten Drehgebers 6 von einem Hersteller an einen Einsatzort, insbesondere zu einer kundenseitig angeordneten Maschinenwelle 4, wie vorliegend an ein Torantriebssystem 1 eines Kunden. Der Drehgeber 6 wird sodann an eine für den Drehgeber 6 vorgegebene Position der Maschinenwelle 4 montiert, welches durch das Bezugszeichen 31 gekennzeichnet ist. Hierbei kann eine separate Erregereinheit 61 an die Antriebswelle 4 befestigt und eine Sensoreinheit 62 zum Auslesen der Erregereinheit 61 entsprechend gegenüberliegend angeordnet werden. Aufgrund des erfindungsgemäßen Verfahrens zur Kalibrierung des Drehgebers 6 kann die Ausrichtung und Montage des Drehgebers 6 an der Maschinenwelle 4 auch durch einen Kunden selbst erfolgen.

Der nunmehr noch relativ ungenau kalibrierte Drehgeber 6 ist in der Lage, zur Ansteuerung des Antriebsmotors 3 verwendet zu werden, um eine Selbst-Kalibrierung, beispielsweise auf eine zweite Messgenauigkeitsstufe, die eine wesentlich genauere Erfassung als die erste Messgenauigkeitsstufe ermöglicht, durchzuführen. Dies ist vorliegend mit dem Bezugszeichen 40 gekennzeichnet.

Zunächst erfolgt ein Beschleunigen 32 der Antriebswelle 4 auf eine vorgegebene, vorzugsweise konstante, Drehzahl, insbesondere eine Drehzahl im Bereich von 1000 Umdrehungen pro Minute. In einem ersten Durchgang der Kalibrierung 40 erfolgt sodann ein Abschalten des Antriebsmotors 3 und ein anschließendes Freilaufen der Antriebswelle 4 bis zu einer vorgegebenen zweiten Drehzahl. Es folgt ein Erfassen 33 eines Start-Messpunktes 61a mittels des Sensors 63 der Sensoreinheit 62.

Mit dem Erfassen 33 des Start-Messpunktes 61a wird ein Zeitmoduls 65 zum Hochzählen eines Zeitwertes t gestartet. Während das Zeitmodul den Zeitwert t hochzählt und die Rotation der Maschinewelle fortsetzt, erfolgt ein Erfassen 35 zumindest eines Zwischen-Messpunktes 61b, 61c, wobei dem erstfassten Zwischen-Messpunkt 61b, 61c ein zum Erfassungszeitpunkt hochgezählter Zeitwert t zugeordnet wird. Die dem Zwischen-Messpunkt 61b, 61c zugeordnete Ist-Drehwinkelposition 72 und der zugeordnete Zeitwert t werden in einem dafür vorgesehenen Speicher geschrieben, welches mit dem Bezugszeichen 36 gekennzeichnet ist.

Beispielsweise nach einer vollen Umdrehung wird ein End-Messpunkt 61d erfasst, welches mit dem Bezugszeichen 37 gekennzeichnet ist. Der End-Messpunkt 61d kann beispielsweise an derselben umfangsseitigen Stelle angeordnet sein wie der Start-Messpunkt 61a. Es wird mittels des Zeitmoduls 65 die benötigte Laufzeit der Drehbewegung von dem Start-Messpunkt 61a zu dem End-Messpunkt 61d festgestellt, welches mit dem Bezugszeichen 38 gekennzeichnet ist.

Anschließend erfolgt ein Berechnen 41 zumindest eines zeitabhängigen Soll-Positionswertes 71 unter Annahme einer konstanten Drehbewegung der Maschinenwelle 4 von dem Start-Messpunkt 61a bis zum End-Messpunkt 61d. Vorteilhafterweise werden mehrere Soll-Positionswerte 71 ermittelt, die in ihrer Gesamtheit einen zeitlichen Soll-Winkelverlauf 71 wiedergeben können. Dieser Soll-Winkelverlauf 71 kann einem "idealen" Winkelverlauf entsprechen, bei dem äußere Einflüsse unberücksichtigt bleiben. Mittels des berechneten Soll-Winkelverlaufs 71 wird eine Abweichung 73 zumindest einer Ist-Drehwinkelposition 72 von der berechneten Soll-Drehwinkelposition 71 für einen bestimmten Zeitwert t berechnet. Vorteilhafterweise geschieht dies ebenfalls für eine Anzahl von Zeitwerten t.

Sofern eine Abweichung der Ist-Drehwinkelposition 72 von dem berechneten Soll-Winkelverlauf 71 vorliegt, erfolgt eine Korrektur 43 des Ausgangssignals des Drehgebers 6 um die berechnete Winkelstrecken-Abweichung 73. Eine solche Winkelstrecken-Abweichung 73 ist insbesondere in Figur 3 gezeigt. Zumindest die Winkelstrecken-Abweichung 73 wird sodann in dem Speichermodul 64 für künftige Berechnungen und Auswertungen gespeichert.

Dieses Vorgehen erfolgt beispielsweise mehrfach nacheinander, so dass eine relativ hohe Messgenauigkeit erreicht werden kann. Es ist zudem möglich, dass die Laufzeitmessung mehrfach pro Umdrehung erfolgt, beispielsweise können zwei Start-Messpunkte 61a und zwei End-Messpunkte 61d pro Umdrehung erfasst werden, so dass eine besonders schnelle und exakte Kalibrierung ermöglicht ist.

In einem anschließenden regulären Betrieb 50 des Drehgebers 6, beispielweise an dem Torantriebssystem 1, wird der an dem Drehgeber 6 erfasste Istwert 72 stets um den in der Speichereinheit 64 gespeicherten Korrekturfaktor der Wegstrecken-Abweichung 73 korrigiert, so dass der sodann um die Abweichung 73 korrigierte Drehwinkelpositionswert an die Steuereinheit 5 zur Steuerung und Regelung des Antriebsmotors 3 übermittelt werden kann.

In der Figur 3 ist beispielhaft eine Abweichung 73 des tatsächlichen zeitlichen Ist-Winkelverlaufs 72 von dem Soll-Winkelverlauf 71 gezeigt. Hierbei ist der Drehwinkel ϕ über die Zeit t dargestellt, wobei zu den Zeitpunkten T₀, T₁ und T₂ jeweils ein Nulldurchgang der Maschinenwelle 4 erfasst ist.

Der Ideal- bzw. Soll-Winkelverlauf 71 entspricht vorliegend im Wesentlichen einer Gerade, so dass keinerlei Brems- oder Ruckelmomente berücksichtigt sind. Der Ist-Winkelverlauf 72 ist im Wesentlichen als eine Auslenkung im Sinne einer Störung entlang der Soll-Winkelverlaufkurve 71 ausgebildet und stellt den gemessenen Winkelverlauf der Maschinenwelle 4 dar. Die Abweichung 73 der Ist-Kurve 72 von der SollKurve 71 entsteht durch die an der Maschinenwelle 4 vorherrschenden Brems- und Ruckelmomente, Einbautoleranzen sowie dem Messsystem unterliegenden, inhärenten Fehlern, wie Verstärkungsfehler, Magnetfehler oder Dergleichen. Die vorliegende Kalibrierung 40 ermöglicht somit eine exakte Angabe der tatsächlichen Winkelposition der Maschinenwelle 4 über den zeitlichen Verlauf.

Dadurch kann für jedes individuelle System ein Drehgeber mit einer besonders hohen Genauigkeit und einer besonders einfachen Montage bereitgestellt werden. Es sollte deutlich sein, dass der erfindungsgemäße Drehgeber nicht auf das vorliegend gezeigte Anwendungsbeispiel, nämlich ein Industrietor, beschränkt ist sondern zur Anwendung an irgendeiner Anlage, einem System, Roboter oder Fahrzeug geeignet ist.

### Bezugszeichenliste

- 1: Torantriebssystem
- 2: Rolltor
- 3: Antriebsmotor
- 4: Antriebswelle
- 5: Steuereinheit
- 6: Drehgeber
- 61: Erregereinheit, Codespur
- 61a: Start-Messpunkt
- 61b: Zwischen-Messpunkt
- 61c: Zwischen-Messpunkt
- 61d: End-Messpunkt
- 62: Sensoreinheit
- 63: Sensor, Hallsensor
- 64: Speichermodul
- 65: Zeitmodul
- 66: Berechnungsmodul
- 67: Zählmodul

- 10: Torbewegung
- 20: Erst-Kalibrieren
- 30: Transportieren
- 31: Montieren
- 32: Drehen der Antriebswelle
- 33: Erfassen Start-Messpunkt
- 34: Aktivieren des Zeitmoduls
- 35: Erfassen Zwischen-Messpunkt
- 36: Speichern
- 37: Erfassen End-Messpunkt
- 38: Ermitteln der Laufzeit

- 40: Kalibrieren
- 41: Berechnung Soll-Positionswert
- 42: Berechnung Abweichung
- 43: Korrigieren des Ausgangssignals
- 44: Berechnen einer künftigen Winkelposition
- 45: Speichern
- 50: regulärer Betrieb

- 71: Ideal- / Soll-Drehwinkelposition,
- 72: Ist-Drehwinkelposition
- 73: Abweichung

## Patentansprüche

1. Verfahren zum Kalibrieren (40) eines Drehgebers (6) zur Erfassung einer Drehwinkelposition einer Maschinenwelle (4), insbesondere eines fremdgelagerten Absolutwertgebers, wobei der Drehgeber (6) zumindest eine mit der Maschinenwelle (4) drehfest verbundene Erregereinheit (61), die zur Erfassung einer Ist-Drehwinkelposition (72) zumindest ein Messpunkt (61a, 61b, 61c, 61d) definiert, und eine mit der Erregereinheit (61) funktional zusammenwirkende, feststehende Sensoreinheit (62) aufweist, **mit den folgenden Schritten:**
- Versetzen (32) der Maschinenwelle (4) in eine Drehbewegung mit einer vorgegebenen Drehgeschwindigkeit,
- Erfassen (33) eines Start-Messpunktes (61a) durch die Sensoreinheit (62),
- Aktivieren (34) eines Zeitmoduls (65) zum Hochzählen eines Zeitwertes (t),
- Erfassen (35) zumindest eines Zwischen-Messpunktes (61b, 61c) durch die Sensoreinheit (62), wobei dem erstfassten Zwischen-Messpunkt (61b, 61c) ein zum Erfassungszeitpunkt hochgezählter Zeitwert (t) zugeordnet wird,
- Speichern (36) der Drehwinkelposition (72) des Zwischen-Messpunktes (61b, 61c) und des zugeordneten Zeitwertes (t),
- Erfassen (37) eines End-Messpunktes (61d) durch die Sensoreinheit (62),
- Feststellen (38) eines mittels des Zeitmoduls (65) hochgezählten Zeitwertes (t), der eine Laufzeit für die Drehbewegung von dem Start-Messpunkt (61a) bis zum End-Messpunkt (61d) wiedergibt,
- Berechnen (41) zumindest einer zeitabhängigen Soll-Drehwinkelposition (71) unter Annahme einer konstanten Drehbewegung der Maschinenwelle (4) von dem Start-Messpunkt (61a) bis zum End-Messpunkt (61d),
- Berechnen (42) einer Abweichung (73) zwischen der erfassten Ist-Drehwinkelposition (72) und der berechneten Soll-Drehwinkelposition (71) für zumindest einen Zeitwert (t) mittels eines im Drehgeber (6) gespeicherten Berechnungsmoduls (66), und
- Korrigieren (43) des Ausgangssignals des Drehgebers (4) um die berechnete Abweichung (73).

2. Verfahren nach Anspruch 1, **dadurch gekennzeichnet, dass** ein Speichern (45) zumindest der erfassten Ist-Drehwinkelposition (72), der berechneten Soll-Drehwinkelposition (71) und/oder der Abweichung (73) in einem Speicher (64) erfolgt.

3. Verfahren nach einem der Ansprüche 1 oder 2, **dadurch gekennzeichnet, dass**
nach dem Berechnen (42) einer Abweichung (73) ein Berechnen (44) eines zukünftigen zeitlichen Winkelverlaufs der Maschinenwelle (4) erfolgt.

4. Verfahren nach einem der voranstehenden Ansprüche, **dadurch gekennzeichnet, dass**
das Berechnen (41) der Soll-Drehwinkelposition (71), das Berechnen (42) der Abweichung (73) und/oder das Berechnen (44) des zeitlichen Winkelverlaufs iterativ erfolgt.

5. Verfahren nach einem der voranstehenden Ansprüche, **dadurch gekennzeichnet, dass**
das Berechnen (41, 42, 44) mittels einer in dem Drehgeber (6) gespeicherten Korrekturtabelle erfolgt.

6. Verfahren nach einem der voranstehenden Ansprüche, **dadurch gekennzeichnet, dass**
zumindest zwei Start-Messpunkte (61a) und zwei End-Messpunkte (61d) pro Umdrehung der Maschinenwelle (4) erfasst werden, so dass pro Umdrehung der Maschinenwelle (4) zumindest zweimal ein Berechnen (41, 42, 44) erfolgt.

7. Verfahren nach einem der voranstehenden Ansprüche, **dadurch gekennzeichnet, dass**
vor dem Versetzen (32) der Maschinenwelle (4) in eine Drehbewegung ein Montieren (31) einer Trägheitsmasse an der Antriebswelle (4) erfolgt.

8. Verfahren nach einem der voranstehenden Ansprüche, **dadurch gekennzeichnet, dass**
vor dem Erfassen (33) eines Start-Messpunktes (61a) ein Abschalten eines die Maschinenwelle (4) antreibenden Antriebsmotors (3) und/oder ein Auskuppeln der Maschinenwelle (4) von einem Antriebsmotor (3) erfolgt, so dass die Antriebswelle (4) für das Erfassen (33, 35, 37) der Messpunkte (61a, 61b, 61c, 61d) in einen Freilauf versetzt wird.

9. Verfahren nach einem der voranstehenden Ansprüche, **dadurch gekennzeichnet, dass**
das Erfassen (33, 35, 37) der Messpunkte (61a, 61b, 61c, 61d) mittels eines Magnetfeldsensors (63), wie eines AMR- oder Hall-Sensors, erfolgt.

10. Verfahren nach einem der voranstehenden Ansprüche, **dadurch gekennzeichnet, dass**
vor dem Versetzen (32) der Maschinenwelle (4) in eine Drehbewegung und vor einer Montage (31) des Drehgebers (6) an der Maschinenwelle (4) ein herstellerseitiges Vor-Kalibrieren (20) des Drehgebers (6) auf eine erste Messgenauigkeitsstufe erfolgt.

11. Drehgeber (6) zur Bestimmung einer korrigierten Drehwinkelposition einer Maschinenwelle (4), insbesondere ein fremdgelagerter Absolutwertgeber, mit zumindest
- einer mit der Maschinenwelle (4) drehfest verbundenen Erregereinheit (61) und einer mit der Erregereinheit (61) funktional zusammenwirkenden, feststehenden Sensoreinheit (62),
- einem Zählmodul (67) zum Hochzählen von erfassten Messpunkten (61a, 61b, 61c, 61d), insbesondere von Nulldurchgängen,
- einem Zeitmodul (65) zum Hochzählen eines Zeitwertes (t), insbesondere einer Laufzeit zwischen zwei Messpunkten (61a, 61b, 61c, 61d),
- einem Berechnungsmodul (66) zum Berechnen (41, 42, 44) zumindest einer Soll-Drehwinkelposition (71) und/oder einer Abweichung (73) zwischen einer erfassten Ist-Drehwinkelposition (72) und einer berechneten Soll-Drehwinkelposition (71) für zumindest einen Zeitwert (t), und
- einem Speichermodul (64) zum Speichern zumindest einer Korrekturtabelle.

## Claims

1. Method for calibrating (40) a rotary encoder (6) for measuring a rotary angle position of a machine shaft (4), in particular an externally mounted absolute-value encoder, wherein the rotary encoder (6) has at least one exciter unit (61) which is rotationally fixedly connected to the machine shaft (4) and by means of which at least one measuring point (61a, 61b, 61c, 61d) is defined to measure an actual rotary angle position (72), and a stationary sensor unit (62) functionally interacting with the exciter unit (61), **comprising the following steps:**
- setting (32) the machine shaft (4) in rotation at a predetermined rotational speed,
- measuring (33) a start measuring point (61a) by the sensor unit (62),
- activating (34) a timer module (65) for incrementing a time value (t),
- measuring (35) at least one intermediate measuring point (61b, 61c) by the sensor unit (62), the intermediate measuring point (61b, 61c) being assigned a time value (t) that has been incremented at the measurement time,
- storing (36) the rotary angle position (72) of the intermediate measuring point (61b, 61c) and the associated time value (t),
- measuring (37) an end measuring point (61d) by the sensor unit (62),
- determining (38) a time value (t) being incremented by the timer module (65) and indicating a runtime for the rotary motion from the start measuring point (61a) to the end measuring point (61d),
- calculating (41) at least one time-dependent reference rotary angle position (71) assuming a constant rotary motion of the machine shaft (4) from the start measuring point (61a) to the end measuring point (61d),
- calculating (42) a deviation (73) between the measured actual rotary angle position (72) and the calculated reference rotary angle position (71) for at least one time value (t) by a calculation module (66) stored in the rotary encoder (6) and
- correcting (43) the output signal of the rotary encoder (6) by the calculated deviation (73).

2. Method according to claim 1, **characterized in that**
at least the measured actual rotary angle position (72), the calculated reference rotary angle position (71) and/or the deviation (73) are stored (45) in a storage (64).

3. Method according to any one of claims 1 or 2, **characterized in that**
calculating (44) a future angular progression over time of the machine shaft (4) is carried out after calculating (42) a deviation (73).

4. Method according to any one of the preceding claims, **characterized in that**
after calculating (41) the reference rotary angle position (71) calculating (42) the deviation (73) and/or calculating (44) the angular progression over time are carried out iteratively.

5. Method according to any one of the preceding claims, **characterized in that**
calculating (41, 42, 44) is carried out by means of a correction table stored in the rotary encoder (6).

6. Method according to any one of the preceding claims, **characterized in that**
at least two start measuring points (61a) and two end measuring points (61d) are measured per revolution of the machine shaft (4) such that calculations (41, 42, 44) is carried out at least twice per revolution of the machine shaft (4).

7. Method according to any one of the preceding claims, **characterized in that**
a mass of inertia is mounted (31) to the drive shaft (4) prior to setting (32) the machine shaft (4) in rotation.

8. Method according to any one of the preceding claims, **characterized in that**
a drive motor (3) driving the machine shaft (4) is switched off and/or the machine shaft (4) is decoupled from a drive motor (3) prior to measuring (33) a start measuring point (61a) such that the machine shaft (4) is set freewheeling for measuring (33, 35, 37) the measuring points (61a, 61b, 61c, 61d).

9. Method according to any one of the preceding claims, **characterized in that**
measuring (33, 35, 37) the measuring points (61a, 61b, 61c, 61d) is carried out by means of a magnetic field sensor (63), such as an AMR or Hall sensor.

10. Method according to any one of the preceding claims, **characterized in that**
a precalibration (20) of the rotary encoder (6) to a first measuring accuracy level is carried by the manufacturer prior to setting (32) the machine shaft (4) in rotation and prior to mounting (31) the rotary encoder (6) to the machine shaft (4).

11. Rotary encoder (6) for determining a corrected rotary angle positon of a machine shaft (4), in particular an externally mounted absolute-value encoder, having at least
- an exciter unit (61) which is rotationally fixedly connected to the machine shaft (4) and a stationary sensor unit (62) functionally interacting with the exciter unit (61),
- a counter module (67) for incrementing measured measuring points (61a, 61b, 61c, 61d), in particular zero crossings,
- a timer module (65) for incrementing a time value (t), in particular a runtime between two measuring points (61a, 61b, 61c, 61d),
- a calculation module (66) for calculating (41, 42, 44) at least one reference rotary angle position (71) and/or a deviation (73) between a measured actual rotary angle position (72) and a calculated reference rotary angle position (71) for at least one time value (t), and
- a storage module (64) for storing at least one correction table.

## Revendications

1. Procédé de calibration (40) d'un capteur rotatif (6) pour détecter une position angulaire de rotation d'un arbre de machine (4), en particulier un capteur absolu monté à l'extérieur, le capteur rotatif (6) comportant au moins une unité d'excitation (61) reliée à l'arbre de machine (4) d'une manière solidaire en rotation, qui, pour la détection d'un angle réel de la position de rotation (72) définit au moins un point de mesure (61a, 61b, 61c, 61d), et présente une unité de capteur stationnaire (62) coopérant fonctionnellement avec l'unité d'excitation (61), **avec les étapes suivantes** :
- mettre (32) l'arbre de la machine (4) dans un mouvement de rotation à une vitesse de rotation prédéterminée,
- détecter (33) un point de mesure initial (61a) par l'unité de capteur (62),
- activer (34) un module de temps (65) pour compter une valeur de temps (t) à l'incrément,
- détecter (35) au moins un point de mesure intermédiaire (61b, 61c) par l'unité de capteur (62), une valeur de temps (t) comptée à l'incrément au moment de la détection étant associée au point de mesure intermédiaire détecté (61b, 61c),
- enregistrer (36) la position angulaire de rotation (72) du point de mesure intermédiaire (61b, 61c) et de la valeur de temps (t) associée,
- détecter (37) un point de mesure final (61d) par l'unité de capteur (62),
- établir (38) une valeur de temps (t) comptée à l'incrément au moyen du module de temps (65), qui représente un temps de course pour le mouvement de rotation du point de mesure initial (61a) jusqu'au point de mesure final (61d),
- calculer (41) au moins une valeur cible dépendant du temps de ladite position angulaire de rotation (71) en supposant un mouvement constant de rotation de l'arbre de machine (4) à partir du point de mesure initial (61a) jusqu'au point de mesure final (61d),
- calculer (42) un écart (73) entre la position angulaire de rotation réelle (72) détectée et la position angulaire de rotation cible (71) calculée pour au moins une valeur de temps (t) utilisant un module de calcul (66) stocké dans le capteur rotatif (6), et
- corriger (43) le signal de sortie du capteur (4) par l'écart calculé (73).

2. Procédé selon la revendication 1, **caractérisé en ce qu'**au moins la position angulaire de rotation réelle (72), la position angulaire de rotation cible calculée (71) et/ou l'écart (73) sont stockés dans une mémoire (64).

3. Procédé selon l'une des revendications 1 ou 2, **caractérisé en ce qu'**après le calcul (42) d'un écart (73), un calcul (44) d'un profil angulaire futur dans le temps de l'arbre de machine (4) est effectué.

4. Procédé selon l'une quelconque des revendications précédentes, **caractérisé en ce que** le calcul (41) de la position angulaire de rotation cible (71), le calcul (42) de l'écart (73) et/ou le calcul (44) du profil angulaire dans le temps s'effectue de manière itérative.

5. Procédé selon l'une quelconque des revendications précédentes, **caractérisé en ce que** le calcul (41, 42, 44) s'effectue au moyen d'une table de correction stockée dans le capteur rotatif (6).

6. Procédé selon l'une quelconque des revendications précédentes, **caractérisé en ce qu'**au moins deux points de mesure initial (61a) et deux points de mesure final (61d) sont enregistrés par chaque tour de l'arbre de machine (4), de sorte qu'un calcul (41, 42, 44) est effectué au moins deux fois par tour de la machine arbre (4).

7. Procédé selon l'une quelconque des revendications précédentes, **caractérisé en ce qu'**avant que l'arbre de machine (4) soit mis (32) dans un mouvement de rotation, une masse inertielle (31) est montée sur l'arbre d'entrainement (4).

8. Procédé selon l'une quelconque des revendications précédentes, **caractérisé en ce qu'**avant la détection (33) d'un point de mesure initial (61a), un moteur d'entrainement (3) entrainant l'arbre de machine (4) est arrêté et/ou l'arbre de machine (4) est débrayé d'un moteur d'entrainement (3), de sorte que l'arbre d'entrainement (4) est mis dans une rotation libre pour la détection (33, 35, 37) des points de mesure (61a, 61b, 61c, 61d).

9. Procédé selon l'une quelconque des revendications précédentes, **caractérisé en ce que** la détection (33, 35, 37) des points de mesure (61a, 61b, 61c, 61d) s'effectue au moyen d'un capteur de champ magnétique (63), tel qu'un capteur AMR ou Hall.

10. Procédé selon l'une quelconque des revendications précédentes, **caractérisé en ce qu'**avant l'arbre de machine (4) est mis (32) dans un mouvement de rotation et avant le capteur rotatif (6) est
monté (31) sur l'arbre de machine (4), le capteur rotatif (6) est pré-calibré (20) à un premier niveau de précision de mesure par le fabricant.

11. Capteur rotatif (6) pour déterminer une position angulaire de rotation corrigée d'un arbre de machine (4), en particulier un capteur absolu monté à l'extérieur, avec au moins
- une unité d'excitation (61) reliée de manière fixe en rotation à l'arbre de machine (4) et une unité de capteur fixe (62) qui coopère fonctionnellement avec l'unité excitatrice (61),
- un module de comptage (67) pour compter en incrément des points de mesure détectés (61a, 61b, 61c, 61d), notamment des passages à zéro,
- un module de temps (65) pour compter en incrément une valeur de temps (t), notamment un temps de transit entre deux points de mesure (61a, 61b, 61c, 61d),
- un module de calcul (66) pour calculer (41, 42, 44) au moins une position angulaire de rotation cible (71) et/ou un écart (73) entre une position angulaire de rotation réelle (72) détectée et une position angulaire de rotation cible (71) calculée pour au moins une valeur de temps (t), et
- un module mémoire (64) pour stocker au moins une table de correction.
